Europäisches Patentamt

European Patent Office

Office européen des brevets

(19)

(11) Publication number: **0 058 545**

**A1**

(12)

# EUROPEAN PATENT APPLICATION

(21) Application number: **82300728.1**

(22) Date of filing: **12.02.82**

(51) Int. Cl.³: **F 16 C 27/06**
**B 60 K 17/24**

(30) Priority: **14.02.81 GB 8104679**

(43) Date of publication of application:
**25.08.82 Bulletin 82/34**

(84) Designated Contracting States:
**DE FR IT SE**

(71) Applicant: **DUNLOP LIMITED**
**Dunlop House Ryder Street St. James's**
**London SW1Y 6PX(GB)**

(72) Inventor: **Moore, Alan Frederick**
**15 Catherines Close**
**Burbage Leicestershire(GB)**

(74) Representative: **Waller, Roy Ernest Sykes et al,**
**Group Patent Department Dunlop Limited 2 Parade**
**Sutton Coldfield West Midlands B72 1PF(GB)**

(54) Improvements in or relating to resilient mountings.

(57) A resilient mounting (20) e.g. for supporting the ball race of a divided propeller shaft of a motor vehicle, comprises outer and inner rigid members (21) and (22) respectively connected by at least one annular resilient diaphragm in which the outer member is adapted for pivotal movement with respect to a component to which it is secured in use. Radial loads applied to the mounting (20) are accommodated by the diaphragm(s) and axial loads by the pivot arrangement whereby the radial stiffness of the diaphragm(s) may be varied to provide any required radial load capability without affecting the axial deflection capability.

Pivotal mounting is effected by a pivot link (32) having a pair of arms (33) each pivotally connected at one end to the outer member (21) and adapted for pivotal connection at the other end to the component to which the mounting is secured in use. Each pivotal connection includes a resilient bush (37) the torsional stiffness of which determines the axial deflection capability. The pivot link (32) is releasably secured to the outer member (21).

./...

Croydon Printing Company Ltd.

FIG.4

0058545

# IMPROVEMENTS IN OR RELATING TO RESILIENT MOUNTINGS

This invention concerns improvements in or relating to resilient mountings and in particular, though not exclusively to resilient mountings for supporting the ball race of a divided propeller shaft of a motor vehicle. Such mountings are commonly referred to as "centre bearings".

Conventional resilient mountings for supporting the ball race of a divided propeller shaft of a motor vehicle commonly comprise an outer rigid tubular member and an inner rigid tubular member positioned within the outer member and radially spaced therefrom by a resilient annular diaphragm. In use the outer member is rigidly secured to the vehicle body and the inner member locates the ball race so that both radial and axial movement of the shaft relative to the vehicle body are accommodated by deformation of the diaphragm and an increase in the radial stiffness of the diaphragm to produce a higher radial load capability is accompanied by an increase in the axial stiffness of the diaphragm to produce a lower axial deflection capability and vice versa i.e. radial load capability and axial deflection capability are interdependent and an improvement in one characteristics is only achieved at the expense of the other characteristic.

As a result for a given installation where the radial space envelope in which the mounting is received is fixed, increasing the radial load capability of the mounting causes the mounting to be highly loaded and stressed under axial deflection which results in poor fatigue performance and possible transmission of noise to the vehicle structure. This problem is increased where axial deflection both in the operating mode and also from the installation position to the actual working position is required.

The invention as claimed is intended to remedy these drawbacks. It solves the problem by providing a resilient mounting in which rigid outer and inner members are connected by a resilient diaphragm to accommodate radial movement therebetween and the outer member is adapted for pivotal movement with respect to a component to which it is secured in use whereby axial deflection is accommodated by the pivot arrangement.

The advantages offered by the invention are mainly that the radial load capability and axial deflection capability of an installation incorporating the mounting are no longer interdependent upon the diaphragm and the latter may be designed to provide any required radial load capability without affecting the overall axial deflection capability of the installation since the latter is determined by the pivot arrangement which is entirely separate from the diaphragm.

As a result it is possible to provide an installation incorporating the mounting which has both high radial load capability and high axial deflection capability.

This is of particular benefit where the mounting is used to support the ball race of a divided propeller shaft in that loads applied to both the resilient diaphragm and the ball race as a result of axial and conical movement of the shaft are substantially reduced leading to improved fatigue life and good vibration insulation from the vehicle structure (reduced noise transmission) while maintaining any required radial load capability.

Preferably the outer member is provided with means at two opposed regions for pivotal connection to link means and the link means in turn is adapted for pivotal connection to said component e.g. a vehicle body.

The link means may comprise a pair of arms each adapted for pivotal connection at one end to the outer member and at the other end to said component. The arms may be separate but more preferably are interconnected by a yoke.

Preferably each pivotal connection includes a resilient bush which may be of a number of forms e.g. cylindrical/buffer ended, tapered, slotted etc depending .

on the required characteristics of the pivot, e.g. torsional stiffness. The resilient bush also damps vibration and reduces noise transmission.

The mounting may be of the type in which the outer and inner members are interconnected by a single diaphragm. but more preferably the mounting is of the type described in our co-pending U.K. Application No.         in which the outer and inner members are interconnected by a pair of diaphragms disposed one on either side of a plane including the centre of the mounting and extending transversely with respect to the axis of the mounting.

The balanced construction obtained with the double diaphragm arrangement avoids the generation of high loads in the mounting when axially deflected as compared with a single diaphragm arrangement in which the diaphragm is offset from the centre of the mounting.

The invention will now be described in more detail, by way of example only, with reference to the accompanying drawings wherein:

Figure 1 is a schematic end view of an
         . installation incorporating a mounting
         according to the present invention;

Figure 2 is a side view of the installation shown

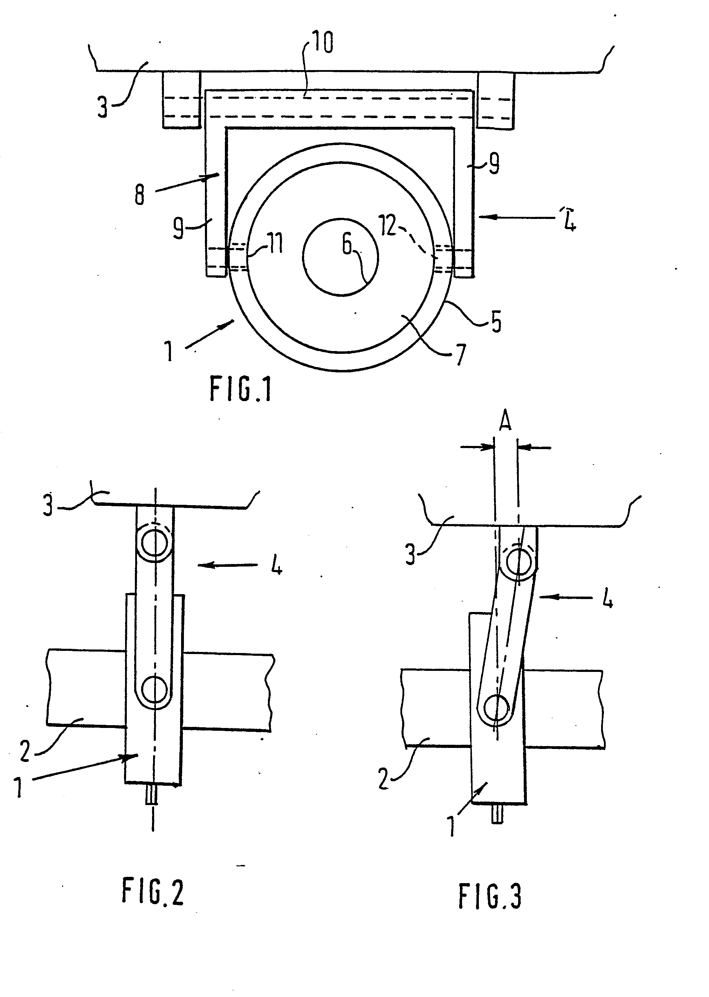

         in Figure 1;

Figure 3 is a side view similar to Figure 2
         showing the installation in an axially
         deflected position;

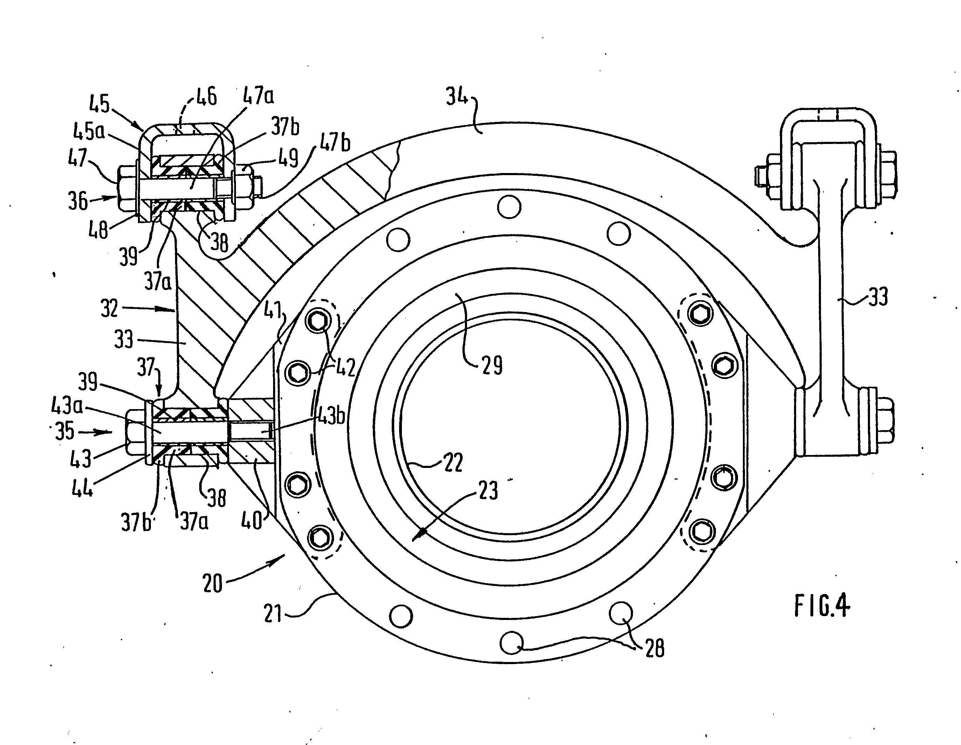

Figure 4 is a detailed end view, partly in section
         of a mounting according to the present
         invention, and

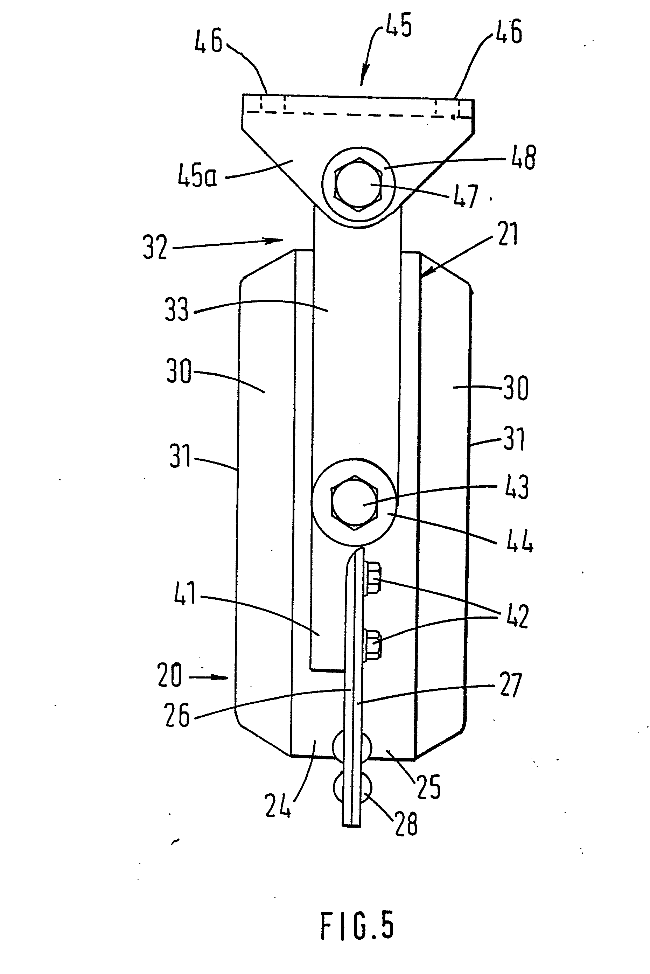

Figure 5 is a side view of the mounting shown in
         Figure 4.

The invention will first be described with reference to the schematic representation of an installation incorporating a mounting according to the present invention shown in Figures 1 to 3 followed by a detailed description of one embodiment shown in Figures 4 and 5.

As shown in Figures 1 to 3 a resilient mounting 1 .

in which the ball race (not shown) of a divided propeller shaft 2 is received is mounted for pivotal movement with respect to a vehicle body 3 by means of a link arrangement 4.

The mounting 1 generally comprises a tubular metal outer member 5 and a tubular metal inner member 6 positioned within member 5 and radially spaced therefrom by an annular rubber diaphragm 7 forming part of a tubular bush bonded to the confronting inner and outer cylindrical surfaces of the outer and inner members 5 and 6 respectively. The ball race of shaft 2 is mounted within inner member 6.

The link arrangement 4 comprises a U-shaped link 8 having a pair of arms 9 connected at respective one ends by a yoke 10. Each arm 9 is pivotally connected at said one end to the vehicle body 3 and at the other free end to the outer member 5 at a respective one of two diametrically opposed positions 11,12.

In use radial loads are accommodated by deformation of the diaphragm 7 the radial stiffness of which may be varied to provide any required radial load capability and axial or conical loads are accommodated by axial deflection A (Figure 3) of the mounting 1 through the pivotal mounting thereof. The torsional stiffness of the pivot link arrangement 4 determines the axial deflection capability and is independent of the axial stiffness of the diaphragm 7 so that variation in the axial stiffness of the diaphragm 7 as a result of varying the radial stiffness thereof has no effect on the axial deflection capability of the mounting.

It will be apparent from the foregoing that the pivotal mounting of the mounting 1 allows for variation in the axial position of the mounting 1 on installation as well as providing the required axial deflection capability in operation. Other advantages arising from the pivot link arrangement are that loads applied to the ball race due to axial and conical movement of the shaft are considerably reduced and good vibration insulation from the vehicle body is obtained as compared with the known mountings in which such loads are accommodated by deformation of the diaphragm. Furthermore the fatigue life of the diaphragm 7 in the mounting according to the present invention is considerably increased by avoiding high axial loading and straining of the diaphragm.

Referring now to Figures 4 and 5 there is shown a mounting 20 according to the present invention comprising an outer tubular metal member 21 and an inner tubular metal member 22 positioned within the outer member 21 and radially spaced therefrom by a resilient rubber bush 23.

The outer member 21 comprises two annular metal rings 24,25 each having a radially outwardly directed annular flange 26,27 at one end. The flanges 26,27 are joined together at a plurality of circumferentially spaced positions 28.

The bush 23 comprises an annular cylindrical hollow body 29 having inner and outer centre portions bonded to the inner and outer members 21,22 and end portions defining respective annular diaphragms 30 extending between opposed end portions of the inner and outer members 21,22.

Each diaphragm 30 is of substantially C-shape in axial cross-section having the apex 31 thereof directed axially outwards of the mounting whereby the diaphragms 30 are deformable in a radial direction by bending about the apices to accommodate relative radial movement between the inner and outer members 21,22 under radial loads.

The hollow body 29 defines an internal fluid-tight chamber in which a lubricant (not shown) is contained to reduce friction between confronting surfaces of the bush when the radial loading exceeds a predetermined magnitude sufficient to close the gap therebetween which exists in the static load condition. Alternatively or in addition an abutment (not shown) may be provided within the chamber to control the operation of the mounting under radial load in known manner.

In accordance with the present invention a pivot link 32 provides for pivotal movement of the mounting 20 with respect to a component e.g. a vehicle body to which the mounting is secured in use whereby axial and conical loads applied to the mounting are accommodated by axial deflection of the mounting.

Link 32 comprises a pair of arms 33 connected by a yoke 34. Each arm 33 is similar and is provided with two pivot assemblies 35,36 one at each end of the arm of which one, 35, is connected to the outer member 21 of mounting 20 at one of two diametrically opposed positions and the other, 36, is adapted for connection to the vehicle body.

Each pivot assembly 35,36 is generally similar including a tubular rubber bush 37 having a cylindrical body portion 37a received in an opening 38 in the end of the associated arm and radially extending end portions 37b of increased diameter. The bush 37 is divided radially about the centre thereof into two parts each of which may be inserted into the opening 38 from a respective one end thereof. An inner cylindrical metal sleeve 39 is received within the bush bore and has an axial length similar to that of the bore and greater than that of the opening 38.

Each pivot assembly 35 further includes a pivot block 40 having a mounting flange 41 releasably secured to the outer member 21 of mounting 20 by four nut and bolt assemblies 42 passing through aligned apertures in the flange 41 and flanges 26,27 of the outer member. A bolt 43 having a shank portion 43a received within sleeve 39 and an externally threaded end portion 43b engaging an internally threaded bore in the pivot block 40 secures the bush 37 to pivot block 40. Bolt 43 carries a washer 44 and the end portions 37b of the bush 37 define resilient buffers to prevent direct metal-to-metal contact between the arm 38 and the washer 44 and pivot block 40.

Each pivot assembly 36 further includes a mounting bracket 45 formed with a pair of openings 46 for bolting or otherwise securing the bracket to a component e.g. a vehicle body.  Bracket 45 has a pair of downwardly depending legs 45a arranged one at either end of bush 37 and formed with a respective opening therein which is aligned with sleeve 39 for passage therethrough of a shank portion 47a of a bolt 47 carry a washer 48.  A nut· 49 fastened to an externally threaded end portion 47b of bolt 47 secures the bush 37 to bracket 45.  The end portions 37b of the bush 37 define resilient buffers to prevent direct metal-to-metal contact between the arm 38 and bracket 45.

In use of the above-described mounting for example as a centre bearing supporting the ball race of a divided propeller shaft the ball race is received within inner member 22 and pivot link 32 attached via brackets 45 to the vehicle body with the pivot axis of the centre bearing extending transverse to the longitudinal axis thereof. Operation of the installation is as previously described in connection with the installation of Figures 1 to 3 with the axial deflection capability being determined by the torsional stiffness of the bushes 37 of pivot assemblies 35,36.  The characteristics of bushes 37 may be selected to provide any desired torsional stiffness while the releasable attachment of the pivot assemblies 35,36 to the mounting and vehicle body provide for ease of assembly and subsequent disassembly for repair work e.g. replacement of the mounting 20 or of one or more of the pivot assemblies 35,36 or the pivot  link 32.

It will be understood that the invention is not restricted to the above described embodiment, for example mountings having either a double diaphragm arrangement as above described or a single diaphragm only between the inner and outer members are included.  Also the mounting may include a resilient buffer associated with one of the inner and outer members for controlling relative radial movement therebetween, friction reducing means e.g. an insert or coating layer of low friction material, on one or both of the confronting surfaces associated with the inner and outer members or a lubricant contained within a .

fluid-tight chamber between the inner and outer members for reducing friction between contacting surfaces when the radial load exceeds a predetermined magnitude.

The pivot blocks may be fixed to the outer member so as to be integral therewith e.g. by welding to the outer member.

The resilient bushes of the pivot assemblies may be of the cylindrical/buffered end type as described or any other suitable form e.g. tapered and may be modified to provide the desired torsional stiffness e.g. the bushes may be slotted.

The pivot assemblies may include resilient bushes to provide the required torsional stiffness or be of any other construction which provides the required torsional stiffness.

The construction of the pivot link may be varied for example the yoke connecting the arms may extend between the ends of the arms, e.g. the link may be generally U-shaped or C-shaped. Alternatively the pivot link may comprise a pair of independent arms.

The mounting may be moulded such that the longitudinal axes of the inner and outer members are co-axial or radially off-set when the mounting is in an unloaded condition. Preferably the extent of any off-set is selected such that when a static load is applied to the inner rigid member e.g. due to the weight of a divided propeller shaft supported by the inner rigid member, the inner member adopts a desired resultant position, either co-axial or off-set relative to the outer member.

9. 0058545

CLAIMS:

1. A resilient mounting (1,20) comprising an outer rigid member (5,21) and an inner rigid member (6,22) positioned within the outer member (5,21) and radially spaced therefrom by at least one resilient annular diaphragm (7,30) to accommodate radial movement therebetween characterised in that the outer member (5,21) is adapted for pivotal movement with respect to a component (3) to which it is secured in use whereby axial deflection is accommodated by the pivot arrangement (4,32).

2. A mounting according to claim 1 characterised in that the outer member (5,21) is adapted at two opposed regions (11,12) for connection to link means (4,32) which in use is connected to said component (3) the arrangement being such that the pivot axis of the mounting (1,20) extends transverse to the longitudinal axis thereof.

3. A mounting according to claim 2 characterised in that the link means (4,32) is releasably secured to the outer member (5,21).

4. A mounting according to claim 2 or claim 3 characterised in that the link means (4,32) is adapted for pivotal connection to said component (3).

5. A mounting according to claim 4 characterised in that the link means (4,32) comprises a pair of arms (9,33) each provided with a first pivot assembly (35) for connection to the outer member (21) and a second pivot assembly (36) for connection to said component.

6. A mounting according to claim 5 characterised in that said arms (9,33) are connected by a yoke (10,34).

7. A mounting according to claim 5 or claim 6 characterised in that said first and second pivot assemblies (35,36) each include a resilient bush (37) which may for example be of either cylindrical (37a) with end portions (37b) of increased diameter defining buffers or tapered construction.

8. A mounting according to any one of the preceding claims characterised in that a pair of axially spaced diaphragms (30) interconnect the first and second members (21,22).

9.    A mounting according to claim 8 characterised in that the diaphragms (30) comprise the end portions of a hollow bush (23) and are arranged symmetrically with respect to a plane extending transverse to the longitudinal axis of the mounting and including the centre of the moulding.

10.    An installation incorporating a resilient mounting (1,20) according to any one of claims 1 to 9 characterised in that the inner member (6,22) supports the ball race of a divided propeller shaft (2) and the outer member (5,21) is pivotally attached to a vehicle body (3) by link means (4,32).

0058545

FIG.1

FIG.2

FIG.3

FIG.4

FIG.5

# European Patent Office

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | DE - C - 889 268 (F.M. GUY) <br> * claims 1 to 3; fig. 1, 2 * <br> -- | 1-7, 10 | F 16 C 27/06 <br> B 60 K 17/24 |
| X | DE - C - 917 650 (F.M. GUY) <br> * claims 1 to 5; fig. 1, 2 * <br> -- | 1-7, 10 | |
| X | US - A - 2 682 434 (F.M. GUY) <br> * fig. 1 to 8 * <br> -- | 1-7, 10 | |
| A | US - A - 2 933 354 (G.H. PRIMEAU) <br> * claims 1, 2; fig. 1 * <br> -- | 8,9 | **TECHNICAL FIELDS SEARCHED (Int.Cl. 3)** |
| A | US - A - 2 715 051 (F.M. GUY) <br> -- | | |
| A | US - A - 2 757 989 (E.J. HERBENAR) <br> ----- | | B 60 K 17/00 <br> F 16 C 27/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 16-04-1982 | MASSALSKI |

EPO Form 1503.1  06.78